(19) Europäisches Patentamt
European Patent Office
Office européen des brevets

(11) **EP 1 803 753 B1**

(12) **EUROPÄISCHE PATENTSCHRIFT**

(45) Veröffentlichungstag und Bekanntmachung des Hinweises auf die Patenterteilung:
**17.02.2010 Patentblatt 2010/07**

(21) Anmeldenummer: **06027070.9**

(22) Anmeldetag: **29.12.2006**

(51) Int Cl.:
*C08F 293/00* (2006.01)       *C08F 2/00* (2006.01)
*C08F 220/00* (2006.01)       *C08F 212/08* (2006.01)
*C09C 3/10* (2006.01)         *C08F 220/00* (2006.01)
*C08F 212/08* (2006.01)       *C09C 3/10* (2006.01)

(54) **Copolymere enthaltend drei Segmente unterschiedlicher Ionendichte, Verfahren zu deren Herstellung und Verwendung derselben**

Copolymers containing three segments of different ion density, method for their production and application of the same

Copolymère comprenant trois segments ayant une épaisseur d'ion variable, son procédé de fabrication et sa utilisation

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **03.01.2006 DE 102006000807**

(43) Veröffentlichungstag der Anmeldung:
**04.07.2007 Patentblatt 2007/27**

(73) Patentinhaber: **Byk-Chemie GmbH**
**46483 Wesel (DE)**

(72) Erfinder:
• **Göbelt, Bernd, Dr.**
**46487 Wesel (DE)**
• **Omeis, Jürgen**
**Dorsten-Lembeck (DE)**
• **Johann, Sabine**
**46047 Oberhausen (DE)**

(74) Vertreter: **Leifert & Steffan**
**Patentanwälte**
**Postfach 10 40 09**
**40031 Düsseldorf (DE)**

(56) Entgegenhaltungen:
**EP-A- 1 275 689       WO-A-00/71660**
**WO-A-01/44389       US-A- 5 085 698**

**Beschreibung**

Die Erfindung betrifft Copolymere enthaltend drei Segmente unterschiedlicher Ionendichte, ein Verfahren zu deren Herstellung sowie deren Verwendung, insbesondere als Dispergiermittel, zur Behandlung von Pigmenten sowie als Additiv in Überzugsmitteln und Formmassen.

In den letzten Jahren wurden verschiedene lebende, kontrollierte Polymerisationsverfahren entwickelt, die sich zur Darstellung von Blockcopolymeren eignen. Zu diesen gehört beispielsweise der "Reversible Addition Fragmentation Chain Transfer Process" (RAFT), der bei Verwendung bestimmter Polymerisationsregler auch MADIX und Addition Fragmentation Chain Transfer genannt wird, die hier nur als RAFT bezeichnet werden sollen, wie er beispielsweise in Polym. Int. 2000, 49, 993, Aust. J. Chem 2005, 58, 379, J. Polym. Sci. Part A: Polym. Chem. 2005, 43, 5347, US 6 291 620, WO 98/01478, WO 98/58974 und WO 99/31144 beschrieben ist, die kontrollierte Polymerisation mit Nitroxylverbindungen als Polymerisationsregler (NMP), wie sie beispielsweise in Chem. Rev. 2001, 101, 3661 offenbart wurde, die "Atom Transfer Radical Polymerization" (ATRP), wie sie beispielsweise in Chem. Rev. 2001, 101, 2921 beschrieben ist, die "Group Transfer Polymerization" (GTP) wie sie beispielsweise von O. W. Webster in "Group Transfer Polymerization", in "Encyclopedia of Polymer Science and Engineering", Band 7, H. F. Mark, N. M. Bikales, C. G. Overberger and G. Menges, Eds., Wiley Interscience, New York 1987, Seite 580 ff. offenbart ist, die kontrollierte radikalische Polymerisation mit Tetraphenylethan, wie sie beispielsweise in Macromol. Symp. 1996, 111, 63 beschrieben ist, die kontrollierte radikalische Polymerisation mit 1,1-Diphenylethen als Polymerisationsregler, wie beispielsweise in Macromolecular Rapid Communications, 2001, 22, 700 beschrieben, die kontrollierte radikalische Polymerisation mit Inifertern, wie sie beispielsweise in Makromol. Chem. Rapid. Commun. 1982, 3, 127 offenbart wird und die kontrollierte radikalische Polymerisation mit Organokobaltkomplexen, wie sie beispielsweise aus J. Am. Chem. Soc. 1994, 116, 7973 bekannt ist.

Die Blockcopolymere, die mit solchen Polymerisationsverfahren erhalten werden, können häufig als Netz- und Dispergiermittel verwendet werden.

In den Offenlegungsschriften WO 00/40630 und WO 03/046029 werden Pigmentpräparationen mit AB und ABA-Blockcopolymeren beschrieben, die auch ionische Gruppen in allen Polymerblöcken enthalten und die mit ATRP hergestellt werden. Nachteilig an dieser Polymerisationstechnologie ist die nicht vollständige Abtrennung der benötigten Metallkatalysatoren, wie zum Beispiel Aminkomplexe von Kupferhalogenidverbindungen. Diese Abtrennung ist bei Polymeren, die polare Monomere, wie aminhaltige, säurehaltige oder ionische Monomere, beinhalten besonders schwierig. Der Verbleib des Katalysators in der Polymerlösung bewirkt eine unerwünschte Grün- oder Blaufärbung der Polymerlösung und eine schnellere Zersetzung der Polymere durch Abbaureaktionen, die durch den verbleibenden Katalysator oder deren Folgeprodukte katalysiert werden, und ist somit unerwünscht.

In EP 1 275 689 werden Pigmentpräparationen mit Diblockcopolymeren, die einen Polymerblock mit ionischen Gruppen und einen Polymerblock frei von ionischen Gruppen enthalten und mit NMP hergestellt werden, beschrieben. Die in der EP 1 275 689 beschriebenen Blockcopolymere neigen in verschiedenen Medien zur Mizellenbildung, die dazu führt, dass Pigmente oder andere Feststoffe langsamer oder gar nicht dispergiert werden. Weiterhin zeigen die in diesem Dokument beschriebenen Blockcopolymere eine sehr begrenzte Verträglichkeit mit unterschiedlichen Bindemitteltypen, wie zum Beispiel Polyesterbindemitteln, die den Einsatz als Netz- und Dispergiermittel stark einschränkt.

Die Aufgabe bestand nun darin Copolymere zur Verfügung zu stellen, und diese so aufzubauen, dass sie nicht die oben beschriebenen Nachteile eines Reinigungsschrittes nach der Reaktion mit sich bringen und die eine sehr gute Dispergierung der Pigmente mit einer breiten Verträglichkeit gegenüber Bindemitteln kombinieren.

Diese Aufgabe wurde durch zur Verfügung stellen von Copolymeren enthaltend drei Segmente unterschiedlicher Ionendichte gelöst, wobei der Anteil der ionischen Monomere in jedem Segment von 1 bis 100 mol% beträgt, das zweite und dritte Segment ethylenisch ungesättigte Monomere des jeweils vorangegangenen Segmentes enthält und die Copolymere mittels eines monofunktionellen Initiators über NMP oder RAFT herstellbar sind, wobei

die Polymerisation des ersten Segmentes bis zu einem Umsetzungsgrad von 10 bis 95 mol% der eingesetzten Monomerenmischung oder des eingesetzten Monomers erfolgt,

die Polymerisation des zweiten Segmentes an das erste Segment unter Einbezug der nicht umgesetzten Monomere des ersten Segmentes und einer Monomerenmischung oder eines Monomers, die oder das sich von der Monomerenmischung oder dem Monomeren des ersten Segmentes zumindest in der Menge der eingesetzten ionischen Monomere oder Vorstufen ionischer Monomere unterscheidet, erfolgt, wobei die Polymerisation des zweiten Segmentes bis zu einem Umsetzungsgrad von 10 bis 95 mol% der zur Reaktion zur Verfügung stehenden Monomere erfolgt, und

die Polymerisation des dritten Segmentes an das zweite Segment unter Einbezug der nicht umgesetzten Monomere des zweiten Segmentes und gegebenenfalls ersten Segmentes und einer Monomerenmischung oder eines Monomers, die oder das sich von der Monomerenmischung oder dem Monomeren des zweiten Segmentes zumindest in der Menge der eingesetzten ionischen Monomere oder Vorstufen ionischer Monomere unterscheidet, erfolgt,

und die gegebenenfalls eingesetzten Vorstufen ionischer Monomere ganz oder teilweise zu ionischen Monomeren umgesetzt werden.

Die Monomere eines Segments liegen im selben naturgemäß einpolymerisiert vor.

Die Ionendichte definiert sich folgendermaßen:

$$\text{Ionendichte} = 100 \times \frac{\text{(Anzahl an ionischen Monomeren in mol)}}{\text{(Anzahl aller Monomeren in diesem Segment in mol)}}$$

Eine Berechnung der Ionendichte der drei Segmente, auf der Basis von Analysedaten, ist im Anschluss an die Synthesevorschrift zur Herstellung von Polymer 3 zur Veranschaulichung dargestellt.

Segmente A und C sind durch den Kettenanfang respektive das Kettenende als auch durch die Zeitpunkte während der Polymerisation, zu welchen begonnen wird eine oder mehrere neue Monomermischungen oder ein neues Monomer in das Reaktionsgefäß zuzuleiten, definiert, während Segment B nur durch die Zeitpunkte während der Polymerisation, zu welchen begonnen wird eine oder mehrere neue Monomermischungen oder ein neues Monomer in das Reaktionsgefäß zuzuleiten, definiert ist. Hierbei besitzen die drei Segmente unterschiedliche Ionendichten. Wird ein Segment durch Zuleitung mehrerer Monomermischungen, einer Monomermischung und eines Monomers oder zweier Monomeren unabhängig voneinander dargestellt, so beginnt die Zuleitung gleichzeitig, kann jedoch unterschiedlich lange erfolgen. Dies wird in den Beispielen bei der Polymerisation des 3. Segments der Polymere 3 und 4 veranschaulicht.

Eine vorteilhafte Ausführungsform besteht daher darin, die erfindungsgemäßen Copolymere so herzustellen, dass die Polymerisation des zweiten Segmentes an das erste Segment so erfolgt, dass dem ersten Segment und den nicht umgesetzten Monomeren des ersten Segments, die Monomerenmischung oder das Monomere, die oder das sich von der Monomerenmischung oder dem Monomeren des ersten Segmentes zumindest in der Menge der eingesetzten ionischen Monomere oder Vorstufen ionischer Monomere unterscheidet, so zugeführt wird, dass über die Zuführgeschwindigkeit und/oder die Reaktionsgeschwindigkeitsunterschiede, gekennzeichnet durch ihre unterschiedlichen Copolymerisationsparameter, der Monomeren in der zugeführten Monomermischung oder dem zugeführten Monomeren ein verlaufender Übergang der Ionendichte innerhalb des zweiten Segments erhalten wird.

Besonders vorteilhaft ist es, dass der Herstellungsprozess der erfindungsgemäßen Copolymere so erfolgt, dass dem Präpolymer aus erstem und zweitem Segment und den nicht umgesetzten Monomeren des zweiten und gegebenenfalls ersten Segments, die Monomerenmischung oder das Monomere, die oder das sich von der Monomerenmischung oder dem Monomeren des zweiten Segments zumindest in der Menge der eingesetzten ionischen Monomere oder Vorstufen ionischer Monomere unterscheidet, der Polymerisation so zugeführt wird, dass über die Zuführgeschwindigkeit und/oder die Reaktionsgeschwindigkeitsunterschiede, gekennzeichnet durch ihre unterschiedlichen Copolymerisationsparameter, der Monomeren in der zugeführten Monomermischung oder dem zugeführten Monomeren ein verlaufender Übergang der Ionendichte innerhalb des dritten Segments erhalten wird.

Die strukturelle Differenzierung des Polymeren in drei Segmente als auch die strukturelle Differenzierung der Segmente selbst ermöglicht ein besseres Einstellen der Eigenschaften der erfindungsgemäßen Copolymere auf ihr gewünschtes Eigenschaftsbild als Netz- und Dispergiermittel im Vergleich zu einem AB-Blockcopolymeren oder einem Gradientencopolymeren wie es beispielsweise in EP-A-1416019 beschrieben ist.

Als erfindungsgemäße Copolymere werden solche verstanden, die durch einen Übergang der Ionendichte entlang der Polymerkette gekennzeichnet sind, und somit die drei Segmente definiert. Dieser Übergang in der Ionendichte bzw. Monomerzusammensetzung kann im Rahmen der oben genannten lebenden, kontrollierten Polymerisationsverfahren durch eine sequenzielle Zugabe der Monomeren oder Monomermischungen erreicht werden. Dadurch dass beim Aufbau der Polymersegmente nicht bis zu einem Umsetzungsgrad von 100 mol-% polymerisiert wird, sondern ein Umsetzungsgrad der Monomere von 10 bis 95%, bevorzugt von 20 bis 95%, besonders bevorzugt 50 bis 90 % realisiert wird, und dass anschließend durch die Zugabe der nächsten Monomermischung respektive des nächsten Monomers der Aufbau des nächsten Polymersegmentes gestartet wird, bildet sich ein verlaufender Übergang der Zusammensetzung des Polymers in jedem Polymersegment aus.

Weiterhin ist der Unterschied zwischen den Polymersegmenten dadurch gekennzeichnet, dass sie ein unterschiedliches Verhältnis ionischer Monomere zu den nicht-ionischen Monomeren enthalten, wobei jedes Polymersegment mindestens ein ionisches Monomer enthalten muss. Der Anteil der ionischen Monomere in einem Segment variiert vorzugsweise von 1 bis 100 mol-%, bezogen auf die Gesamtzahl der Monomere des Segmentes und kann den jeweiligen Erfordernissen des Einsatzzwecks angepasst werden.

Hierbei enthält das Polymersegment mit der höchsten Konzentration an ionischen Monomeren nur ethylenisch ungesättigte Monomere mit ionischen Gruppen oder eine Mischung enthaltend ethylenisch ungesättigte Monomere mit ionischen Gruppen und ethylenisch ungesättigte Monomere mit nicht-ionischen Gruppen. Die Polymersegmente mit den niedrigeren Konzentrationen an ionischen Gruppen sind gekennzeichnet durch Mischungen von ethylenisch ungesättigten Monomeren mit ionischen Gruppen und ethylenisch ungesättigten Monomeren mit nicht-ionischen Gruppen. Alle drei Segmente enthalten unterschiedliche Konzentrationen an ionischen Gruppen.

Vorzugsweise besitzen die als Dispergiermittel zu verwendenden Copolymere ein zahlenmittleres Molekulargewicht $M_n$ von 1000 bis 20000 g/mol, besonders bevorzugt 2000 bis 20000 g/mol und ganz besonders bevorzugt 2000 bis 15000 g/mol.

Jeder der drei Segmente besitzt mindestens ein zahlengemitteltes Molekulargewicht von 300 g/mol.

Ionische Gruppen sind Gruppen, die anionisch oder kationisch sind respektive formal eine negative oder positive Ladung tragen. Hierbei können auch in einem ethylenisch ungesättigten Monomer mehrere ionische Gruppen enthalten sein, wie zum Beispiel in zwitterionischen Verbindungen oder in Betainen.

Die ionischen Gruppen können als entsprechendes ionisches ethylenisch ungesättigtes Monomer in das Polymer eingeführt werden oder nachträglich durch polymeranaloge Reaktionen, wie zum Beispiel Salzbildung oder Quaternisierung von tertiären Aminoverbindungen, erzeugt werden.

So ist es zum Beispiel möglich Säurefunktionen im Polymer wie zum Beispiel Carbonsäuren und Phosphorsäureester mit Basen umzusetzen bzw. Säureanhydride wie zum Beispiel Maleinsäureanhydrid in Gegenwart von OH-funktionellen Verbindungen wie Wasser oder einwertigen Alkoholen oder Polyethern mit Basen umzusetzen.

Oxiranstrukturen im Polymer lassen sich mit Nucleophilen wie o-Phosphorsäure und anschließender Versalzung mit Basen zu ionischen Gruppen umsetzen.

Hydroxyfunktionalitäten im Polymer lassen sich mit Polyphosphorsäure zu Phosphorsäureester und anschließender Versalzung mit Basen zu ionischen Gruppen umsetzen.

Geeignete Basen sind beispielsweise Amine wie zum Beispiel Dimethylaminoethanol, Diethanolamin, Triethanolamin, 2-(Dimethylamino)propan-1-ol, Triethylamin, Butylamin und Dibutylamin, Hydroxide, Oxide, Carbonate und Hydrogencarbonate von Metallen der 1. bis 3. Hauptgruppe des Periodensystems der Elemente, wie zum Beispiel Natriumhydroxid, Kaliumhydroxid, Aluminiumhydroxid und Natriumhydrogencarbonat.

Wie beispielsweise in US 6111054 beschrieben, ist es auch möglich, die Versalzung von am Polymer gebundenen Aminen mit Carbonsäuren oder Phosphorsäuren und deren Estern vorzunehmen.

Weiterhin lassen sich Amine in Alkylierungsreaktionen mit Alkylhalogeniden, wie zum Beispiel mit Benzylchlorid, oder mit einer Kombination von Oxiran mit Carbonsäure in quartären Ammoniumsalze überführen.

Tertiäre Amine können mit Sauerstoff, Peroxoverbindungen wie Percarbonsäuren und mit Wasserstoffperoxid in Aminoxide überführt werden, die zusätzlich mit Säuren wie zum Beispiel Salzsäure versalzt werden können.

Beispiele für ionische, ethylenisch ungesättigte Monomere können der nachfolgenden Liste entnommen werden, wobei die Schreibweise (Meth)acrylat sowohl Acrylate als auch Methacrylate einschließt: Salze der Acrylsäure, Methacrylsäure oder Maleinsäure; quartäre Aminoalkyl(meth)acrylate, wie zum Beispiel 2-Trimethylammoniumethylmethacrylatchlorid und 2-Benzyldimethylammoniumethyl(meth)acrylatchlorid; Salze phosphorsäurehaltiger Monomere, wie zum Beispiel Natriumtripropyleneglycolmethacrylatphosphat.

Beispiele für nicht-ionische, ethylenisch ungesättigte Monomere können der nachfolgenden Liste entnommen werden, wobei die Schreibweise (Meth)acrylat sowohl Acrylat als auch Methacrylat einschließt: (Meth)acrylsäureester, wie beispielsweise Alkyl(meth)acrylate von geradkettigen, verzweigten oder cycloaliphatischen Alkoholen mit 1 bis 22 C-Atomen, wie zum Beispiel Methyl(meth)acrylat, Ethyl(meth)acrylat, n-Butyl(meth)acrylat, i-Butyl(meth)acrylat, t-Butyl (meth)acrylat, Lauryl(meth)acrylat, 2-Ethylhexyl(meth)acrylat, Stearyl(meth)acrylat, Cyclohexyl(meth)acrylat, Isobornyl (meth)acrylat, Aryl(meth)acrylate, wie Benzylmethacrylat oder Phenylacrylat, wobei die Arylreste jeweils unsubstituiert oder bis zu vierfach substituiert sein können, wie zum Beispiel 4-Methylphenylmethacrylat, Hydroxyalkyl(meth)acrylate von geradkettigen, verzweigten oder cycloaliphatischen Diolen mit 3 bis 36 C-Atomen, wie zum Beispiel 3,4-Dihydroxybutylmonomethacrylat, 4-Hydroxybutyl(meth)acrylat, 2,5-Dimethyl-1,6-hexandiolmonomethacrylat, Caprolacton- und/oder Valerolacton-modifizierte Hydroxyalkyl(meth)acrylate mit einem mittleren Molekulargewicht $M_n$ von 220 bis 1200, wobei die Hydroxy(meth)acrylate bevorzugt von geradkettigen, verzweigten oder cycloaliphatischen Diolen mit 2 bis 8 C-Atomen abgeleitet sind, Mono(meth)acrylate von Polypropylenglycolen mit 10 bis 80 C-Atomen, (Meth)acrylate von halogenierten Alkoholen, wie zum Beispiel Perfluoralkyl(meth)acrylate mit 6 bis 20 C-Atomen; Oxiranyl(meth)acrylate, wie zum Beispiel 2,3-Epoxybutylmethacrylat, 3,4-Epoxybutylmethacrylat und Glycidyl(meth)acrylat, 2-Hydroxyethyl(meth)acrylat und Mono(meth)acrylate von Polyethylenglykolen mit 10 bis 80 C-Atomen; Aminoalkyl(meth)acrylate, wie zum Beispiel N,N-Dimethylaminoethyl(meth)acrylat und N,N-Dimethylaminopropyl(meth)acrylat; Styrol und Styrolederivate, wie zum Beispiel 4-Methylstyrol und 4-Vinylbenzoesäure; Methacrylnitril und Acrylnitril; Vinylester von Carbonsäuren mit insbesondere 1 bis 20 C-Atomen, wie zum Beispiel Vinylacetat; Maleinimid, und N-substituierte Maleinimide wie N-Phenylmaleinimid oder N-substituierte Maleinimide mit geradkettigen, verzweigten oder cycloaliphatischen Alkylgruppen mit 1 bis 22 C-Atomen, wie zum Beispiel N-Ethylmaleinimid und N-Octylmaleinimid; Stickstoff oder Schwefel enthaltende Heterocyclen mit ethylenisch ungesättigten Einheiten, wie zum Beispiel 4-Vinylpyridin und 1-[2-(Methacryloyloxy)-ethyl]-2-imidazolidinon; (Meth)acrylamid; N-Alkyl- und N,N-Dialkylsubstituierte Acrylamide mit geradkettigen, verzweigten oder cycloaliphatischen Alkylgruppen mit 1 bis 22 C-Atomen, wie zum Beispiel N-(t-Butyl)acrylamid und N,N-Dimethylacrylamid.

Weiterer Gegenstand der vorliegenden Erfindung ist ein Verfahren zur Herstellung von Copolymeren enthaltend drei Segmente unterschiedlicher Ionendichte, wobei der Anteil der ionischen Monomere in jedem Segment von 1 bis 100 mol% beträgt, jedes Segment mindestens ein ionisches Monomer enthält, das zweite und dritte Segment Monomere des jeweils vorangegangenen Segmentes enthält und die Copolymere mittels eines monofunktionellen Initiators über NMP oder RAFT hergestellt werden, wobei

die Polymerisation des ersten Segmentes bis zu einem Umsetzungsgrad von 10 bis 95 mol% der eingesetzten Monomerenmischung oder des eingesetzten Monomers erfolgt,

die Polymerisation des zweiten Segmentes an das erste Segment unter Einbezug der nicht umgesetzten Monomere des ersten Segmentes und einer Monomerenmischung oder eines Monomers, die oder das sich von der Monomerenmischung oder dem Monomeren des ersten Segmentes zumindest in der Menge der eingesetzten ionischen Monomere oder Vorstufen ionischer Monomere unterscheidet, erfolgt, wobei die Polymerisation des zweiten Segmentes bis zu einem Umsetzungsgrad von 10 bis 95 mol% der zur Reaktion zur Verfügung stehenden Monomere erfolgt, und

die Polymerisation des dritten Segmentes an das zweite Segment unter Einbezug der nicht umgesetzten Monomere des zweiten Segmentes und gegebenenfalls ersten Segmentes und einer Monomerenmischung oder eines Monomers, die oder das sich von der Monomerenmischung oder dem Monomeren des zweiten Segmentes zumindest in der Menge der eingesetzten ionischen Monomere oder Vorstufen ionischer Monomere unterscheidet, erfolgt,

und die gegebenenfalls eingesetzten Vorstufen ionischer Monomere ganz oder teilweise zu ionischen Monomeren umgesetzt werden.

Weitere bevorzugte Ausführungsformen des erfindungsgemäßen Verfahrens ergeben sich aus den zur Charakterisierung des erfindungsgemäßen Copolymers genannten Verfahrensmerkmalen, wie sie teilweise auch in den Ansprüchen 10 bis 13 unter Schutz gestellt sind.

Die für die Darstellung der erfindungsgemäßen Copolymere verwendeten monofunktionellen Initiatoren starten eine Polymerkette mit nur einer Wachstumsrichtung. Die im jeweiligen lebenden, kontrollierten Polymerisationsverfahren eingesetzten monofunktionellen Initiatoren sind dem Durchschnittsfachmann bekannt. Als Initiatoren können beispielsweise Azoinitiatoren wie Azodiisobutyronitril, Peroxidverbindungen, wie Dibenzoylperoxid und Dicumylperoxid als auch Persulfate wie Kaliumperoxodisulfat eingesetzt werden.

Beispiele für Polymerisationsregler sind in der oben zitierten Literatur aufgeführt; für NMP sind zum Beispiel 2,2,6,6-Tetramethylpiperidinoxyl (TEMPO) oder N-*tert*-Butyl-N-[1-diethylphosphono-(2,2-dimethylpropyl)]nitroxyl und für RAFT beispielsweise Thiocarbonsäureester oder Xanthogensäureester geeignet.

Des Weiteren können bei der NMP Addukte des Initiators mit dem Polymerisationsregler eingesetzt werden, wie zum Beispiel in Chem. Rev. 2001, 101, 3661, V. Approaches to Alkoxyamines oder in Angewandte Chemie Int. Ed. 2004, 43, 6186 beschrieben.

Die Polymerisation kann lösemittelfrei in Substanz oder in organischen Lösemitteln und/oder Wasser erfolgen. Bei Verwendung von Lösemitteln kann die Polymerisation als klassische Lösemittelpolymerisation, bei der das Polymer im Lösemittel gelöst ist, durchgeführt werden oder als Emulsions- oder Miniemulsionspolymerisation, wie sie zum Beispiel in Angewandte Chemie Int. Ed. 2004, 43, 6186 und Macromolecules 2004, 37, 4453 beschrieben wird, durchgeführt werden. Das erhaltene Emulsions- bzw. Miniemulsionspolymerisat kann durch Salzbildung wasserlöslich gemacht werden, so dass eine homogene Polymerlösung entsteht. Es können die Polymere nach der Versalzung immer noch wasserunlöslich sein.

Dabei sind die erhaltenen Copolymere nicht zwangsläufig über den Polymerisationsregler als Endgruppe definiert. Die Endgruppe kann beispielsweise nach der Polymerisation ganz oder teilweise abgespalten werden. So ist es zum Beispiel möglich die Nitroxylendgruppe der Polymeren, welche mit NMP hergestellt wurde, thermisch durch Erhöhung der Temperatur über die Polymerisationstemperatur hinaus abzuspalten. Diese Abspaltung des Polymerisationsreglers kann beispielsweise auch durch Zugabe weiterer chemischer Verbindungen wie Polymerisationsinhibitoren, die beispielsweise Phenolderivate sind, oder durch ein Verfahren wie es in Macromolecules 2001, 34, 3856 beschrieben ist, geschehen.

Der RAFT-Regler kann thermisch durch Erhöhung der Temperatur vom Polymeren abgespalten werden, durch Zugabe von Oxidationsmitteln wie Wasserstoffperoxid, Persäuren, Ozon oder anderen Bleichmitteln vom Polymeren entfernt werden oder mit Nucleophilen wie Aminen unter Ausbildung einer Thiolendgruppe umgesetzt werden.

Nach erfolgter Polymerisation können die Copolymere nachträglich in polymeranalogen Reaktionen verändert werden. Zum Beispiel lassen sich Hydroxyfunktionalitäten im Polymer mit Lactonen wie zum Beispiel ε-Caprolacton zu Polyestern umsetzen. Es können hierbei auch wie zuvor erwähnt die ionischen Gruppen im Polymer erzeugt werden.

Die erfindungsgemäßen Copolymere können erfindungsgemäß als Dispergiermittel, zum Beispiel zur Dispergierung von Pigmenten verwendet werden. Die Pigmentdispersionen, welche die erfindungsgemäßen Copolymere als Dispergiermittel enthalten, können in einer Vielzahl von Anwendungen eingesetzt werden. Eine erfindungsgemäße Verwendung besteht beispielsweise in der Dispergierung von Pigmenten in organischen Lösemitteln und/oder Wasser, gegebenenfalls in Gegenwart von Bindemitteln und lacküblichen Hilfsstoffen.

So können die erfindungsgemäßen Copolymere beispielsweise bei der Herstellung Überzugsmitteln insbesondere pigmentierten Überzugsmitteln, wie z. B. Lacken, Pasten und/oder Formmassen erfindungsgemäß eingesetzt werden. Derartige Dispergiermittel lassen sich zum Beispiel zur Herstellung von Pigmentlacken, wobei ein Lackbindemittel und/oder Lösungsmittel sowie Feststoffe, d. h. Pigmente und gegebenenfalls übliche Hilfsstoffe vermischt werden, verwenden. Lackbindemittel sind hier makromolekulare oder Makromoleküle bildende Stoffe, welche für die Filmbildung zuständig sind. Geeignet sind zum Beispiel 2-Komponenten-Reaktionslacke, lufttrocknende Lacke, feuchtigkeitshärtende Lacke, säurehärtende Lacke, strahlungshärtende Lacke, Dispersionslacke oder Einbrennlacke. Beispielhaft seien zu nennen Vinylesterharze, Alkydharze, Polyesterharze, Polyurethanharze, ungesättigte Polyesterharze, Polyester/Polyisocyanat-Kombinationen, Acrylharze, Epoxidharze, Epoxidharzester, Ethylen-Vinylacetat-Polymere, MelaminFormaldehyd-Harze, Phenol-Formaldehyd-Harze, Polymethylmethacrylat, Polypropylen, Polyethylen, Polyamide, Polystyrol, Polyurethan, Polyvinylacetat, Polyvinylbutyrat, Polyvinylchlorid, Polyvinylidenchlorid, Polyvinylidenfluorid, Polyvinylfluorid, Chlorkautschuk, Cyclokautschuk, Silicon-Polymere, Harnstoff-Formaldehyd-Harze, Vinylchlorid-Vinylacetat-Polymere, Polybutadien, usw., sowie Mischungen der vorgenannten Substanzen. Weiterhin können in den Bindemitteln auch vernetzend wirkende Monomere mit wenigstens zwei nichtkonjugierten ethylenisch ungesättigten Doppelbindungen vorhanden sein. Beispiele hierfür sind Divinylbenzol, Alkylenglycoldi(meth)acrylate, wie Ethylenglycoldiacrylat, 1,3-Propylenglycoldiacrylat, 1,2-Propylenglycoldimethacrylat sowie Allyl(meth)acrylat, Diallylmaleat, Triallylcyanursäure oder Triallyisocyanursäure. Erfindungsgemäß ist daher auch die Verwendung der erfindungsgemäßen Copolymere zur Herstellung von Überzugsmitteln, wobei ein Bindemittel, ein oder mehrere organische Lösemittel und/oder Wasser, Pigmente, das Dispergiermittel und gegebenenfalls weitere lacküblichen Hilfsstoffe zusammen dispergiert werden.

Gegenstand der Erfindung ist auch die Verwendung der erfindungsgemäßen Copolymere als Dispergiermittel bei der Herstellung von pigmentierten Formmassen und pigmentierten Überzugsmitteln beziehungsweise pigmentierten Überzügen auf Substraten, wobei der Pigmentlack auf das Substrat aufgebracht wird und wobei der auf das Substrat aufgebrachte Pigmentlack eingebrannt oder ausgehärtet bzw. vernetzt wird. Die Dispergiermittel können dabei alleine oder zusammen mit nicht funktionsgebundenen Bindemitteln eingesetzt werden.

Eine erfindungsgemäße Verwendung der ionischen Copolymere als Dispergiermittel kann auch in der Herstellung dispergierbarer Pigmente bestehen, die mit dem Dispergiermittel beschichtet sind. Derartige Beschichtungen der Pigmente können beispielsweise wie in der EP-A-0270126 beschrieben durchgeführt werden.

Weitere Beispiele für die Verwendung von Pigmentdispersionen sind in der WO 00/40630 aufgeführt.

Die Dispergiermittel können zur Dispergierung von organischen Pigmenten, wie zum Beispiel Azo- und Diazokondensaten und deren Metallkomplexe, Phthalocyanine, Chinacridone, Indole, Thioindole, Perylene, Athrachinone, Anthrapyrimidine, Diketopyrrolopyrrole und Carbazole eingesetzt werden. Weitere Beispiele für Pigmente finden sich in der Monographie: W. Herbst, K. Hunger "Industrial Organic Pigments", 1997 (Verlag: Wiley-VCH, ISBN: 3-527-28836-8).

Weiterhin lassen sich anorganische Pigmente, wie beispielsweise Eisen(III)oxid, Chrom(III)oxid, Molybdänsulfid, Cadmiumsulfid, Ruß, Graphit, Bismutvanadat, Bleichromat oder Bleimolybdat, dispergieren.

Die Wahl der ionischen Gruppen und der ethylenisch ungesättigten Monomere richtet sich nach dem zu dispergierenden Pigment sowie dem flüssigen Medium und dem Bindemittel und kann von Fall zu Fall verschieden sein. Die Monomere können beispielsweise so gewählt sein, dass diese in Wechselwirkung mit dem zu dispergierenden Material treten. Häufig werden diese Monomere beispielsweise aus der Gruppe bestehend aus Aminoalkyl(meth)acrylaten, deren Aminfunktionalität entweder mit Säuren versalzt oder mit Alkylierungsmitteln zu quartären Ammoniumgruppen umgesetzt wurden, ausgewählt.

Weiterer Gegenstand der vorliegenden Erfindung sind Lacke, Pasten und Formmassen enthaltend das erfindungsgemäße Copolymer und ein oder mehrere Pigmente, organische Lösemittel und/oder Wasser, sowie gegebenenfalls Bindemittel und lacküblichen Hilfsstoffe. Des Weiteren sind Pigmente beschichtet mit dem erfindungsgemäßen Copolymer Gegenstand der Erfindung.

**BEISPIELE**

**Synthese der Polymere**

Polymer 1

48 g 2-Methoxypropanol, 3,7 g SG1 (= N-*tert*-Butyl-N-[1-diethylphosphono-(2,2-dimethylpropyl)]nitroxyl; Herstellung siehe Macromolecules 2000, 33, 1141), 1,3 g 2,2'-Azobis(isobutyronitrile), 8 g 2-Hydroxyethylmethacrylat (61,5 mmol), 39,32 g n-Butylacrylat (307 mmol), 17,3 g 2-(N,N-Dimethylamino)ethylmethacrylat (112 mmol) und 18,4 g Styrol (177 mmol) werden in einem Reaktionsgefäß unter einer Inertgasatmosphäre (Stickstoff) bei 120°C zur Reaktion gebracht bis ein Umsatz von 95% (gemessen mit $^1$H-NMR) erreicht ist.
Anschließend wird 21,5 g Styrol (207 mmol) und 64,7 g n-Butylacrylat (505 mmol) in 10 sec hinzugegeben und eine Mischung aus 24 g 2-Hydroxyethylmethacrylat (185 mmol) und 36 g 2-Methoxypropanol über einen Zeitraum von 180 min bei 120°C hinzudosiert. Nach Beendigung der Dosierung ist ein Umsatz von 94% (gemessen mit $^1$H-NMR) erreicht und die Reaktion wird durch herunterkühlen auf Raumtemperatur abgebrochen. Die Polymerlösung wird mit 2-Methoxypropanol auf einen Festkörper von 50% eingestellt.

Netz- und Dispergiermittel 1 (N+D-Mittel 1) (Vergleichspolymer: AB-Blockcopolymer mit einem ionischen Block)

Bildung der ionischen Gruppen:

120 g der Polymerlösung 1 werden mit 4,0 g Benzoesäure und 7,25g t-Butylphenylglycidylether bei 120°C 2 h zur Reaktion gebracht. Die Polymerlösung wird mit 2-Methoxypropanol auf einen Festkörper von 50% eingestellt.


Polymer 2

48 g 2-Methoxypropanol, 3,7 g SG1 (= N-*tert*-Butyl-N-[1-diethylphosphono-(2,2-dimethylpropyl)]nitroxyl; Herstellung siehe Macromolecules 2000, 33, 1141), 1,3 g 2,2'-Azobis(isobutyronitrile), 104 g n-Butylacrylat, und 39,9 g Styrol werden in einem Reaktionsgefäß unter einer Inertgasatmosphäre (Stickstoff) bei 120°C zur Reaktion gebracht und während der Reaktion 17,3 g 2-(N,N-Dimethylamino)ethylmethacrylat und 32 g 2-Hydroxyethylmethacrylat (185 mmol) in 36 g 2-Methoxypropanol über einen Zeitraum von 300 min hinzudosiert. Nach Beendigung der Dosierung ist ein Umsatz von 93% (gemessen mit $^1$H-NMR) erreicht und die Reaktion wird durch herunterkühlen auf Raumtemperatur abgebrochen. Die Polymerlösung wird mit 2-Methoxypropanol auf einen Festkörper von 50% eingestellt.

Netz- und Dispergiermittel 2 (N+D-Mittel 2) (Vergleichspolymer: Gradientencopolymer)

Bildung der ionischen Gruppen:

120 g der Polymerlösung 2 werden mit 4,0 g Benzoesäure und 7,25g t-Butylphenylglycidylether bei 120°C 2 h zur Reaktion gebracht. Die Polymerlösung wird mit 2-Methoxypropanol auf einen Festkörper von 50% eingestellt.


Polymer 3

48 g 2-Methoxypropanol, 3,7 g SG1, 1,3 g 2,2'-Azobis(isobutyronitrile), 39,32 g n-Butylacrylat (307 mmol), 6,6 g 2-(N,N-Dimethylamino)ethylmethacrylat (42 mmol) werden in einem Reaktionsgefäß unter einer Inertgasatmosphäre (Stickstoff) auf 120°C erwärmt. 15 min nachdem die Reaktionstemperatur von 120°C erreicht wurde ist ein Umsetzungsgrad von 90% für 2-(N,N-Dimethylamino)ethylmethacrylat und 29% für n-Butylacrylat erreicht (gemessen mit GC). Anschließend wird eine Mischung aus 8 g 2-Hydroxyethylmethacrylat (61,5 mmol), 11,0 g 2-(N,N-Dimethylamino)ethylmethacrylat (70 mmol) und 18,4 g Styrol (177 mmol) über einen Zeitraum von 30 min hinzudosiert. Nach ca. 4 h ist ein Umsatz von 95% für 2-(N,N-Dimethylamino)ethylmethacrylat und Styrol, 99% 2-Hydroxyethylmethacrylat und 90% für n-Butylacrylat (gemessen mit GC) erreicht. Daraufhin wird 21,5 g Styrol (207 mmol) und 64,7 g n-Butylacrylat (505 mmol) in 1 min hinzugegeben und eine Mischung aus 24 g 2-Hydroxyethylmethacrylat (185 mmol), 1,5 g 2-(N,N-Dimethylamino)ethylmethacrylat (9,5 mmol) und 36 g 2-Methoxypropanol über einen Zeitraum von 180 min bei 120°C hinzudosiert. Nach Beendigung der Dosierung ist ein Umsatz von 96% (gemessen mit $^1$H-NMR) erreicht und die Reaktion wird durch herunterkühlen auf Raumtemperatur abgebrochen. Die Polymerlösung wird mit 2-Methoxypropanol auf einen Festkörper von 50% eingestellt.

Netz- und Dispergiermittel 3 (N+D-Mittel 3) (Ionendichte in mol-%: 1. Segment 30%, 2. Segment 14% und 3. Segment 1 %)

Bildung der ionischen Gruppen:

120 g der Polymerlösung 3 werden mit 4,3 g Benzoesäure und 7,9 g t-Butylphenylglycidylether bei 120°C 2 h zur Reaktion gebracht. Die Polymerlösung wird mit 2-Methoxypropanol auf einen Festkörper von 50% eingestellt.

Berechnung der Ionendichte:

| | mol eingesetzt | Umsetzungsgrad mol polymerisiert | mol unpolymerisiert |
|---|---|---|---|
| **1. Segment** | | | |
| BA | 307 | 89 | 218 |
| DMAEMA | 42 | 38 | 4 |
| | | | |
| **2. Segment** | | | |
| BA | 307 | 276 - 89 = 187 | 31 |
| DMAEMA | 42 + 70 = 112 | 106 - 38 = 68 | 6 |
| HEMA | 61,5 | 61 | 0,5 |
| S | 177 | 168 | 9 |

(fortgesetzt)

| | mol eingesetzt | Umsetzungsgrad mol polymerisiert | mol unpolymerisiert |
|---|---|---|---|
| 3. Segment | | | |
| BA | 307 + 505 = 812 | 505 + 31 = 536 | |
| DMAEMA | 112 + 9,5 = 121,5 | 9,5 | |
| HEMA | 61,5 + 185 = 246,5 | 185 + 0,5 = 185,5 | |
| S | 177 + 207 = 384 | 207 + 9 = 216 | |

| 1. Segment | 38 /(38 + 89) | = 30 mol-% |
|---|---|---|
| 2. Segment | 68 /(187 + 68 + 61 + 168) | = 14 mol-% |
| 3. Segment | 9,5 /(536 + 9,5 + 185,5 + 216) | = 1 mol-% |

Polymer 4

48 g 2-Methoxypropanol, 3,7 g SG1, 1,3 g 2,2'-Azobis(isobutyronitrile), 39,32 g n-Butylacrylat (307 mmol), 6,6 g 2-(N,N-Dimethylamino)ethylmethacrylat (42 mmol) werden in einem Reaktionsgefäß unter einer Inertgasatmosphäre (Stickstoff) auf 120°C erwärmt. 15 min nachdem die Reaktionstemperatur von 120°C erreicht wurde ist ein Umsetzungsgrad von 90% für 2-(N,N-Dimethylamino)ethylmethacrylat und 29% für n-Butylacrylat erreicht (gemessen mit GC). Anschließend wird eine Mischung aus 8 g 2-Hydroxyethylmethacrylat (61,5 mmol), 11,0 g 2-(N,N-Dimethylamino)ethylmethacrylat (70 mmol) und 18,4 g Styrol (177 mmol) über einen Zeitraum von 30 min hinzudosiert. Nach ca. 4 h ist ein Umsatz von 95% für 2-(N,N-Dimethylamino)ethylmethacrylat und Styrol, 99% 2-Hydroxyethylmethacrylat und 90% für n-Butylacrylat (gemessen mit GC) erreicht. Daraufhin wird 21,5 g Styrol (207 mmol) und 64,7 n-Butylacrylat (505 mmol) in 1 min hinzugegeben und eine Mischung aus 24 g 2-Hydroxyethylmethacrylat (185 mmol), 6 g 2-(N,N-Dimethylamino) ethylmethacrylat (38 mmol) und 36 g 2-Methoxypropanol über einen Zeitraum von 180 min bei 120°C hinzudosiert. Nach Beendigung der Dosierung ist ein Umsatz von 97% (gemessen mit $^1$H-NMR) erreicht und die Reaktion wird durch herunterkühlen auf Raumtemperatur abgebrochen. Die Polymerlösung wird mit 2-Methoxypropanol auf einen Festkörper von 50% eingestellt.

Netz- und Dispergiermittel 4 (N+D-Mittel 4) (Ionendichte in mol-%: 1. Segment 30%, 2. Segment 14% und 3. Segment 4%)

Bildung der ionischen Gruppen:

120 g der Polymerlösung werden mit 5,3 g Benzoesäure und 9,8 g t-Butylphenylglycidylether bei 120°C 2 h zur Reaktion gebracht. Die Polymerlösung wird mit 2-Methoxypropanol auf einen Festkörper von 50% eingestellt.

Polymer 5

48 g 2-Methoxypropanol, 3,7 g SG1, 1,3 g 2,2'-Azobis(isobutyronitrile), 47,32 g n-Butylacrylat, 17,3 g 2-(N,N-Dimethylamino)ethylmethacrylat und 18,4 g Styrol werden in einem Reaktionsgefäß unter einer Inertgasatmosphäre (Stickstoff) auf 120°C bis zu einem Umsetzungsgrad von 90% ($^1$H-NMR) zur Reaktion gebracht. Anschließend wird eine Mischung aus 89 g n-Butylacrylat und 21,5 g Styrol hinzugegeben und auf einen Umsatz von 98% ($^1$H-NMR) polymerisiert. Die Polymerlösung wird mit 2-Methoxypropanol auf einen Festkörper von 50% eingestellt.

Netz- und Dispergiermittel 5 (N+D-Mittel 5) (Vergleichspolymer: AB-Blockcopolymer)

100 g der Polymerlösung 5 werden mit 3,2 g Benzylchlorid bei 120°C 4 h zur Reaktion gebracht. Die Polymerlösung wird mit 2-Methoxypropanol auf einen Festkörper von 40% eingestellt.

Netz- und Dispergiermittel 6 (N+D-Mittel 6) (Vergleichspolymer: AB-Blockcopolymer)

100 g der Polymerlösung 5 werden mit 3,4 g Benzoesäure versalzt. Die Polymerlösung wird mit 2-Methoxypropanol auf einen Festkörper von 50% eingestellt.

Netz- und Dispergiermittel 7 (N+D-Mittel 7) (Vergleichspolymer: AB-Blockcopolymer)

100 g der Polymerlösung 5 werden mit 14,8 g Disperbyk 102 (Polyethermonophosphat, Hersteller: BYK-Chemie, Deutschland) versalzt. Die Polymerlösung wird mit 2-Methoxypropanol auf einen Festkörper von 50% eingestellt.

Polymer 6

48 g 2-Methoxypropanol, 3,7 g SG1, 1,3 g 2,2'-Azobis(isobutyronitrile), 39,32 g n-Butylacrylat (307 mmol), 6,6 g 2-(N,N-Dimethylamino)ethylmethacrylat (42 mmol) werden in einem Reaktionsgefäß unter einer Inertgasatmosphäre (Stickstoff) auf 120°C erwärmt. 15 min nachdem die Reaktionstemperatur von 120°C erreicht wurde ist ein Umsetzungsgrad von 31% erreicht (gemessen mit $^1$H-NMR). Anschließend wird eine Mischung aus 8 g n-Butylacrylat (62,5 mmol), 11,0 g 2-(N,N-Dimethylamino)ethylmethacrylat (70 mmol) und 18,4 g Styrol (177 mmol) über einen Zeitraum von 30 min hinzudosiert. Nach ca. 4 h ist ein Umsatz von 89% (gemessen mit $^1$H-NMR) erreicht. Daraufhin wird 21,5 g Styrol (207 mmol) und 64,7 g n-Butylacrylat (505 mmol) in 1 min hinzugegeben und eine Mischung aus 24 g n-Butylacrylat (187,5 mmol), 1,5 g 2-(N,N-Dimethylamino)ethylmethacrylat (9,5 mmol) und 36 g 2-Methoxypropanol über einen Zeitraum von 180 min bei 120°C hinzudosiert. Nach Beendigung der Dosierung ist ein Umsatz von 96% (gemessen mit $^1$H-NMR) erreicht und die Reaktion wird durch herunterkühlen auf Raumtemperatur abgebrochen. Die Polymerlösung wird mit 2-Methoxypropanol auf einen Festkörper von 50% eingestellt.

Netz- und Dispergiermittel 8 (N+D-Mittel 8) (erfindungsgemäßes Polymer)

100 g der Polymerlösung 6 werden mit 3,2 g Benzylchlorid bei 120°C 4 h zur Reaktion gebracht. Die Polymerlösung wird mit 2-Methoxypropanol auf einen Festkörper von 40% eingestellt.

Netz- und Dispergiermittel 9 (N+D-Mittel 9) (erfindungsgemäßes Polymer)

100 g der Polymerlösung 6 werden mit 3,4 g Benzoesäure versalzt. Die Polymerlösung wird mit 2-Methoxypropanol auf einen Festkörper von 50% eingestellt.

Netz- und Dispergiermittel 10 (N+D-Mittel 10) (erfindungsgemäßes Polymer)

100 g der Polymerlösung 6 werden mit 14,8 g Disperbyk 102 (Polyethermonophosphat, Hersteller: BYK-Chemie, Deutschland) versalzt. Die Polymerlösung wird mit 2-Methoxypropanol auf einen Festkörper von 50% eingestellt.

**Anwendungstechnische Abtestung**

| Pigmentkonzentrat | |
|---|---|
| 2-Methoxypropylacetat | 51,8 |
| Starsol | 5,8 |
| Netz - und Dispergiermittel 1 - 10 | 34,0 |
| Bayferrox 130 M | 204,0 |
| Aerosil R 972 | 4,5 |
| | 300,0 |

Dispergierung: 40 min bei 40°C und 8000 U/min, Dispermat CV

| Lack 1: | |
|---|---|
| Epikote 1001 (75% i. Xylene) | 60,0 |
| Xylene | 17,0 |
| 2-Methoxypropanol | 12,8 |
| n- Butanol | 10,0 |
| BYK- 325 | 0,2 |
| | 100,0 |

| Härter: | |
|---|---|
| Versamid 115 / 70 | 71,0 |
| Xylene | 12,0 |
| 2-Methoxypropanol | 8,0 |
| n-Butanol | 9,0 |
| | 100,0 |

| Lack 2: | |
|---|---|
| Joncryl 500 | 57,6 |
| Cymel 303 | 19,8 |

(fortgesetzt)

| Lack 2: | |
|---|---|
| MAK | 13 |
| n- Butanol | 8 |
| BYK- 310 | 0,3 |
| Nacure 2500 | 1,3 |
| | 100,0 |

| | |
|---|---|
| Starsol | Mischung von Diestern, Hersteller Haltermann |
| Bayferrox 130 M | Eisenoxidpigment, Hersteller Lanxess |
| Aerosil R 972 | hydrophobe, pyrogene Kieselsäure, Hersteller Degussa |
| Epikote 1001 | Reaktionsprodukt von Bisphenol A mit Epichlorhydrin, Hersteller Shell |
| Joncryl 500 | OH-terminiertes Polyacrylatbindemittel, Hersteller Johnson |
| Cymel 303 | Melaminharz, Bindemittel, Cytec |
| Nacure 2500 | Katalysator, Hersteller King Industries |
| MAK | Methylamylketon |
| BYK-310 | modifiziertes Polysiloxan, Hersteller Byk Chemie |
| BYK-325 | modifiziertes Polysiloxan, Hersteller Byk Chemie |
| Versamid 115 / 70 | aminhaltiges Polyamid, Hersteller Cognis |

| Auflackung und Aushärtung des Lackes 1 | |
|---|---|
| Pigmentkonzentrat | 2,6 |
| Lack 1 | 18,3 |
| Härter | 9,1 |
| | 30,0 |

Das Pigmentkonzentrat wird mit dem Lack 5 min gerüttelt bevor der Härter zugegeben wird und weitere 5 min gerüttelt wird.
Nach der Applikation wird ein Rub-out Test durchgeführt.
Trocknung: 24 h bei Raumtemperatur
Messung des ∆E-Wertes mit Color-guide sphere d/8° spin von Byk Gardner.

| Auflackung und Aushärtung des Lackes 2 | |
|---|---|
| Pigmentkonzentrat | 3,6 |
| Lack 2 | 26,4 |
| | 30,0 |

Das Pigmentkonzentrat wird mit dem Lack 5 min gerüttelt.
Nach der Applikation wird ein Rub-out Test durchgeführt.
Trocknung: 10 min bei Raumtemperatur, dann 30 min bei 140 °C
Messung des ∆E-Wertes mit Color-guide sphere d/8° spin von Byk Gardner.

| Beurteilung des Lackfilms 1 | | | |
|---|---|---|---|
| Viskosität des Pigmentkonzentrats | | Stippen | ∆E-Wert |
| N+D-Mittel 1 | es konnte kein Pigmentkonzentrat hergestellt werden | | |
| N+D-Mittel 2 | niedrig | nein | 4,23 |
| N+D-Mittel 3 | niedrig | nein | 0,64 |
| N+D-Mittel 4 | niedrig | nein | 0,19 |

Beurteilung des Lackfilms 2

| | Viskosität des Pigmentkonzentrats | Stippen | ΔE-Wert |
|---|---|---|---|
| N+D-Mittel 5 | mittel | nein | 0,23 |
| N+D-Mittel 6 | mittel | nein | 0,18 |
| N+D-Mittel 7 | mittel | nein | 0,25 |
| N+D-Mittel 8 | niedrig | nein | 0,21 |
| N+D-Mittel 9 | niedrig | nein | 0,15 |
| N+D-Mittel 10 | niedrig | nein | 0,26 |

Der Rubout-Test zeigt durch das Eigenausschwimmen des Pigmentes das Pigmentdispersionsstabilisierungsvermögen des Netz- und Dispergiermittels an. Hierbei gilt: je kleiner der ΔE-Wert ist, desto besser stabilisiert das Netz- und Dispergiermittel die Pigmentteilchen im Lack.

Da mit dem Vergleichsbeispiel N+D-Mittel 1 kein flüssiges Pigmentkonzentrat hergestellt werden konnte, zeigt dieses Polymer weitaus schlechtere benetzende oder/und dispergierenden Eigenschaften als die erfindungsgemäßen N+D-Mittel 3 und 4, die wiederum das Pigment besser als Vergleichsbeispiel N+D-Mittel 2 stabilisieren.

In dem zweiten Testsystem wird durch Verwendung der Triblockcopolymere (N+D-Mittel 8, 9 und 10) ein niedrigviskoseres Pigmentkonzentrat erhalten als bei Verwendung der korrespondierenden Diblockcopolymere (N+D-Mittel 5, 6 und 7). Diese niedrige Viskosität kann zum Beispiel vorteilhaft für einen höheren Pigmentfüllgrad genutzt werden. Somit kann Lösemittel eingespart werden.

## Patentansprüche

1.   Copolymere enthaltend drei Segmente unterschiedlicher Ionendichte, wobei der Anteil der ionischen Monomere in jedem Segment von 1 bis 100 mol% beträgt, das zweite und dritte Segment ethylenisch ungesättigte Monomere des jeweils vorangegangenen Segmentes enthält und die Copolymere mittels eines monofunktionellen Initiators über NMP oder RAFT herstellbar sind, wobei

die Polymerisation des ersten Segmentes bis zu einem Umsetzungsgrad von 10 bis 95 mol% der eingesetzten Monomerenmischung oder des eingesetzten Monomers erfolgt,

die Polymerisation des zweiten Segmentes an das erste Segment unter Einbezug der nicht umgesetzten Monomere des ersten Segmentes und einer Monomerenmischung oder eines Monomers, die oder das sich von der Monomerenmischung oder dem Monomeren des ersten Segmentes zumindest in der Menge der eingesetzten ionischen Monomere oder Vorstufen ionischer Monomere unterscheidet, erfolgt, wobei die Polymerisation des zweiten Segmentes bis zu einem Umsetzungsgrad von 10 bis 95 mol% der zur Reaktion zur Verfügung stehenden Monomere erfolgt, und

die Polymerisation des dritten Segmentes an das zweite Segment unter Einbezug der nicht umgesetzten Monomere des zweiten Segmentes und gegebenenfalls ersten Segmentes und einer Monomerenmischung oder eines Monomers, die oder das sich von der Monomerenmischung oder dem Monomeren des zweiten Segmentes zumindest in der Menge der eingesetzten ionischen Monomere oder Vorstufen ionischer Monomere unterscheidet, erfolgt, und die gegebenenfalls eingesetzten Vorstufen ionischer Monomere ganz oder teilweise zu ionischen Monomeren umgesetzt werden.

2.   Copolymere nach Anspruch 1, wobei die Polymerisation des zweiten Segments an das erste Segment so erfolgt, dass dem ersten Segment und den nicht umgesetzten Monomeren des ersten Segments, die Monomerenmischung oder das Monomere, die oder das sich von der Monomerenmischung oder dem Monomeren des ersten Segments zumindest in der Menge der eingesetzten ionischen Monomere oder Vorstufen ionischer Monomere unterscheidet, so zugeführt wird, dass über die Zuführgeschwindigkeit und/oder die Reaktionsgeschwindigkeitsunterschiede der Monomeren in der zugeführten Monomermischung oder dem zugeführten Monomeren ein verlaufender Übergang der Ionendichte innerhalb des zweiten Segments erhalten wird.

3.   Copolymere nach Anspruch 1 oder 2, wobei die Polymerisation des dritten Segments an das zweiten Segment so erfolgt, dass dem Präpolymer aus erstem und zweitem Segment und den nicht umgesetzten Monomeren des zweiten und gegebenenfalls ersten Segments, die Monomerenmischung oder das Monomere, die oder das sich von der Monomerenmischung oder dem Monomeren des zweiten Segments zumindest in der Menge der eingesetzten ionischen Monomere oder Vorstufen ionischer Monomere unterscheidet so zugeführt wird, dass über die Zuführgeschwindigkeit und/oder die Reaktionsgeschwindigkeitsunterschiede der Monomeren in der zugeführten Monomermischung oder dem zugeführten Monomeren ein verlaufender Übergang der Ionendichte innerhalb des dritten Segments erhalten wird.

4. Copolymere nach einem oder mehreren der Ansprüche 1 bis 3, wobei das Polymersegment mit der höchsten Konzentration an ionischen Monomeren nur ethylenisch ungesättigte Monomere mit ionischen Gruppen oder eine Mischung enthaltend ethylenisch ungesättigte Monomere mit ionischen Gruppen und ethylenisch ungesättigte Monomere mit nicht-ionischen Gruppen enthält und die Polymersegmente mit den niedrigeren Konzentrationen an ionischen Gruppen Mischungen von ethylenisch ungesättigten Monomeren mit ionischen Gruppen und ethylenisch ungesättigten Monomeren mit nicht-ionischen Gruppen sind und wobei die nicht-ionischen ethylenisch ungesättigten Monomere gewählt sind aus der Gruppe bestehend aus Acryl- und Methacrylsäureestern, Styrol und dessen Derivaten, Vinylestern von Carbonsäuren, Maleinsäureanhydrid und Maleinsäure, Maleinimid und dessen N-substituierten Derivaten, Stickstoff oder Schwefel enthaltenden Heterocyclen mit ethylenisch ungesättigten Einheiten, Acryl- und Methacrylamid, N-Alkyl- und N,N-Dialkyl-substituierte Acryl- und Methacrylamide.

5. Copolymere nach einem oder mehreren der Ansprüche 1 bis 4, wobei die ionischen Monomere ionische ethylenisch ungesättigte Monomere sind, gewählt aus der Gruppe bestehend aus den Salzen der Acryl-, Methacryl- und Maleinsäure, quartären Aminoalkylacrylaten und -methacrylaten und Salzen phosphorsäurehaltiger Monomere.

6. Copolymere nach einem oder mehreren der Ansprüche 1 bis 5, wobei die Vorstufen ionischer Monomere Vorstufen ionischer ethylenisch ungesättigter Monomere sind, gewählt aus der Gruppe bestehend aus Acryl-, Methacryl- und Maleinsäure, Maleinsäureanhydrid, Oxiran- oder Aminogruppen tragenden ethylenisch ungesättigten Monomeren.

7. Copolymere nach einem oder mehreren der Ansprüche 1 bis 6, wobei sich benachbarte Segmente unterschiedlicher Ionendichte im Anteil der ionischen Monomere um mindestens 2, vorzugsweise mindestens 4, besonders bevorzugt mindestens 6 mol% unterscheiden.

8. Verfahren zur Herstellung von Copolymeren enthaltend drei Segmente unterschiedlicher Ionendichte, wobei der Anteil der ionischen Monomere in jedem Segment von 1 bis 100 mol% beträgt, jedes Segment mindestens ein nicht-ionisches und mindestens ein ionisches Monomer enthält, das zweite und dritte Segment Monomere des jeweils vorangegangenen Segmentes enthält und die Copolymere mittels eines monofunktionellen Initiators über NMP oder RAFT hergestellt werden, wobei
die Polymerisation des ersten Segmentes bis zu einem Umsetzungsgrad von 10 bis 95 mol% der eingesetzten Monomerenmischung oder des eingesetzten Monomers erfolgt,
die Polymerisation des zweiten Segmentes an das erste Segment unter Einbezug der nicht umgesetzten Monomere des ersten Segmentes und einer Monomerenmischung oder eines Monomers, die oder das sich von der Monomerenmischung oder dem Monomeren des ersten Segmentes zumindest in der Menge der eingesetzten ionischen Monomere oder Vorstufen ionischer Monomere unterscheidet, erfolgt, wobei die Polymerisation des zweiten Segmentes bis zu einem Umsetzungsgrad von 10 bis 95 mol% der zur Reaktion zur Verfügung stehenden Monomere erfolgt, und
die Polymerisation des dritten Segmentes an das zweite Segment unter Einbezug der nicht umgesetzten Monomere des zweiten Segmentes und gegebenenfalls ersten Segmentes und einer Monomerenmischung oder eines Monomers, die oder das sich von der Monomerenmischung oder dem Monomeren des zweiten Segmentes zumindest in der Menge der eingesetzten ionischen Monomere oder Vorstufen ionischer Monomere unterscheidet, erfolgt, und die gegebenenfalls eingesetzten Vorstufen ionischer Monomere ganz oder teilweise zu ionischen Monomeren umgesetzt werden.

9. Verfahren nach Anspruch 8, wobei die Polymerisation des zweiten Segments an das erste Segment so erfolgt, dass dem ersten Segment und den nicht umgesetzten Monomeren des ersten Segments, die Monomerenmischung oder das Monomere, die oder das sich von der Monomerenmischung oder dem Monomeren des ersten Segments zumindest in der Menge der eingesetzten ionischen Monomere oder Vorstufen ionischer Monomere unterscheidet, der Polymerisation so zugeführt wird, dass über die Zuführgeschwindigkeit und/oder die Reaktionsgeschwindigkeitsunterschiede der Monomeren in der zugeführten Monomermischung oder dem zugeführten Monomeren ein verlaufender Übergang der Ionendichte innerhalb des zweiten Segments erhalten wird.

10. Verfahren nach Anspruch 8 oder 9, wobei die Polymerisation des dritten Segments an das zweite Segment so erfolgt, dass dem Präpolymer aus erstem und zweitem Segment und den nicht umgesetzten Monomeren des zweiten und gegebenenfalls ersten Segments, die Monomerenmischung oder das Monomere, die oder das sich von der Monomerenmischung oder dem Monomeren des zweiten Segments zumindest in der Menge der eingesetzten

EP 1 803 753 B1

ionischen Monomere oder Vorstufen ionischer Monomere unterscheidet der Polymerisation so zugeführt wird, dass über die Zuführgeschwindigkeit und/oder die Reaktionsgeschwindigkeitsunterschiede der Monomeren in der zugeführten Monomermischung oder dem zugeführten Monomeren ein verlaufender Übergang der Ionendichte innerhalb des dritten Segments erhalten wird.

**11.** Verfahren nach einem oder mehreren der Ansprüche 8 bis 10, wobei in einem weiteren Schritt der Polymerisationsregler vom Polymeren abgespalten wird.

**12.** Verfahren nach einem oder mehreren der Ansprüche 8 bis 11, wobei das erhaltene Copolymer in einem weiteren Schritt in einer polymeranalogen Reaktion modifiziert wird.

**13.** Verwendung des Copolymers aus einem oder mehreren der Ansprüche 1 bis 7 oder hergestellt nach einem oder mehreren der Ansprüche 8 bis 12 als Dispergiermittel.

**14.** Verwendung des Copolymers aus einem oder mehreren der Ansprüche 1 bis 7 oder hergestellt nach einem oder mehreren der Ansprüche 8 bis 12, wobei die Monomere, die in Wechselwirkung mit dem zu dispergierenden Feststoff oder den zu dispergierenden Feststoffen treten, ausgewählt sind aus der Gruppe bestehend aus Aminoalkyl(meth) acrylaten, deren Aminfunktionalität entweder mit Säuren versalzt oder mit Alkylierungsmitteln zu quartären Ammoniumgruppen umgesetzt wurden.

**15.** Verwendung des Copolymers aus einem oder mehreren der Ansprüche 1 bis 7 oder hergestellt nach einem oder mehreren der Ansprüche 8 bis 12 zur Dispergierung von Pigmenten in organischen Lösemitteln und/oder Wasser, gegebenenfalls in Gegenwart von Bindemitteln und lacküblichen Hilfsstoffen.

**16.** Verwendung des Copolymers aus einem oder mehreren der Ansprüche 1 bis 7 oder hergestellt nach einem oder mehreren der Ansprüche 8 bis 12 zur Herstellung von Pigmente enthaltenden Überzugsmitteln und Formmassen und zur Beschichtung von Pigmenten.

**17.** Verwendung des Copolymers aus einem oder mehreren der Ansprüche 1 bis 7 oder hergestellt nach einem oder mehreren der Ansprüche 8 bis 12 zur Herstellung eines Überzugsmittels, wobei ein Bindemittel, ein oder mehrere organische Lösemittel und/oder Wasser, Pigmente, das Dispergiermittel und gegebenenfalls weitere übliche Hilfsstoffe zusammen dispergiert werden.

**18.** Lacke, Pasten und Formmassen enthaltend Pigmente und das Copolymer aus einem oder mehreren der Ansprüche 1 bis 7 oder hergestellt nach einem oder mehreren der Ansprüche 8 bis 12.

**19.** Überzugsmittel, Pasten und/oder Formmassen gemäß einem oder mehreren der Ansprüche 1 bis 7 oder hergestellt nach einem oder mehreren der Ansprüche 8 bis 12, wobei diese ein oder mehrere Pigmente, organische Lösemittel und/oder Wasser, gegebenenfalls in Gegenwart von Bindemitteln und lacküblichen Hilfsstoffen enthalten.

**20.** Pigmente beschichtet mit dem Copolymer aus einem oder mehreren der Ansprüche 1 bis 7 oder hergestellt nach einem oder mehreren der Ansprüche 8 bis 12.

**Claims**

**1.** Copolymers containing three segments of different ion density, the fraction of the ionic monomers in each segment being from 1 to 100 mol %, the second and third segment containing ethylenically unsaturated monomers of the respectively preceding segment and the copolymers being preparable by means of a monofunctional initiator by way of NMP or RAFT, wherein
the polymerisation of the first segment takes place up to a degree of conversion of from 10 to 95 mol % of the monomer mixture or monomer employed,
the polymerisation of the second segment onto the first segment takes place with inclusion of the unreacted monomers of the first segment and of a monomer mixture or monomer which differs from the monomer mixture or monomer of the first segment at least in the amount of ionic monomers or ionic monomer precursors employed, the polymerisation of the second segment taking place up to a degree of conversion of from 10 to 95 mol % of the monomers available for reaction, and
the polymerisation of the third segment onto the second segment takes place with inclusion of the unreacted monomers of the second segment and, where appropriate, first segment and of a monomer mixture or monomer which differs from the monomer mixture or monomer of the second segment at least in the amount of ionic monomers or ionic monomer precursors employed,

and the ionic monomer precursors, where used, are converted wholly or partly into ionic monomers.

2. Copolymers according to claim 1, wherein the polymerisation of the second segment onto the first segment takes place in such a way that the monomer mixture or the monomer, which differs from the monomer mixture or monomer of the first segment at least in the amount of ionic monomers or ionic monomer precursors employed, is supplied to the first segment and the unreacted monomers of the first segment in such a way that a progressive transition in ion density is obtained within the second segment by way of the rate of supply and/or the differences in reaction rate of the monomers in the monomer mixture or monomer supplied.

3. Copolymers according to claim 1 or 2, wherein the polymerisation of the third segment onto the second segment takes place in such a way that the monomer mixture or the monomer, which differs from the monomer mixture or monomer of the second segment at least in the amount of ionic monomers or ionic monomer precursors employed, is supplied to the prepolymer formed from the first and second segment and the unreacted monomers of the second and, where appropriate, first segment in such a way that a progressive transition in ion density is obtained within the third segment by way of the rate of supply and/or the differences in reaction rate of the monomers in the monomer mixture or monomer supplied.

4. Copolymers according to one or more of claims 1 to 3, wherein the polymer segment having the highest concentration of ionic monomers contains only ethylenically unsaturated monomers having ionic groups or a mixture containing ethylenically unsaturated monomers having ionic groups and ethylenically unsaturated monomers having nonionic groups and the polymer segments having the lower concentrations of ionic groups are mixtures of ethylenically unsaturated monomers having ionic groups and ethylenically unsaturated monomers having nonionic groups and wherein the nonionic ethylenically unsaturated monomers are selected from the group consisting of acrylic and methacrylic acid esters, styrene and its derivatives, vinyl esters of carboxylic acids, maleic anhydride and maleic acid, maleimide and its N-substituted derivatives, nitrogen or sulphur-containing heterocycles with ethylenically unsaturated units, acrylamide and methacrylamide, N-alkyl and N,N-dialkyl-substituted acrylamides and methacrylamides.

5. Copolymers according to one or more of claims 1 to 4, wherein the ionic monomers are ionic ethylenically unsaturated monomers selected from the group consisting of the salts of acrylic, methacrylic and maleic acid, quaternary aminoalkyl acrylates and methacrylates and salts of monomers containing phosphoric acid.

6. Copolymers according to one or more of claims 1 to 5, wherein the ionic monomer precursors are precursors of ionic ethylenically unsaturated monomers selected from the group consisting of acrylic, methacrylic and maleic acid, maleic anhydride and ethylenically unsaturated monomers carrying oxirane or amino groups.

7. Copolymers according to one or more of claims 1 to 6, wherein adjacent segments of different ion density differ in the fraction of ionic monomers by at least 2, preferably at least 4, particularly preferably at least 6 mol %.

8. Process for preparing copolymers containing three segments of different ion density, the fraction of the ionic monomers in each segment being from 1 to 100 mol %, each segment containing at least one nonionic and at least one ionic monomer, the second and third segment containing monomers of the respectively preceding segment and the copolymers being prepared by means of a monofunctional initiator by way of NMP or RAFT, wherein

the polymerisation of the first segment takes place up to a degree of conversion of from 10 to 95 mol % of the monomer mixture or monomer employed,

the polymerisation of the second segment onto the first segment takes place with inclusion of the unreacted monomers of the first segment and of a monomer mixture or monomer which differs from the monomer mixture or monomer of the first segment at least in the amount of ionic monomers or ionic monomer precursors employed, the polymerisation of the second segment taking place up to a degree of conversion of from 10 to 95 mol % of the monomers available for reaction, and

the polymerisation of the third segment onto the second segment takes place with inclusion of the unreacted monomers of the second segment and, where appropriate, first segment and of a monomer mixture or monomer which differs from the monomer mixture or monomer of the second segment at least in the amount of ionic monomers or ionic monomer precursors employed,

and the ionic monomer precursors, where used, are converted wholly or partly into ionic monomers.

9. Process according to claim 8, wherein the polymerisation of the second segment onto the first segment takes place in such a way that, for the first segment and the unreacted monomers of the first segment, the monomer mixture or the monomer, which differs from the monomer mixture or monomer of the first segment at least in the amount of ionic monomers or ionic monomer precursors employed, is supplied to the polymerisation in such a way that a progressive transition in ion density is obtained within the second segment by way of the rate of supply and/or the differences in reaction rate of the monomers in the monomer mixture or monomer supplied.

10. Process according to claim 8 or 9, wherein the polymerisation of the third segment onto the second segment takes place in such a way that, for the prepolymer formed from the first and second segment and the unreacted monomers of the second and, where appropriate, first segment, the monomer mixture or the monomer, which differs from the monomer mixture or monomer of the second segment at least in the amount of ionic monomers or ionic monomer precursors employed, is supplied to the polymerisation in such a way that a progressive transition in ion density is obtained within the third segment by way of the rate of supply and/or the differences in reaction rate of the monomers in the monomer mixture or monomer supplied.

11. Process according to one of claims 8 to 10, wherein the polymerisation regulator is cleaved from the polymer in a further step.

12. Process according to one of claims 8 to 11, wherein the copolymer obtained is modified in a further step in a polymer-analogous reaction.

13. Use of the copolymer from one or more of claims 1 to 7 or prepared according to one or more of claims 8 to 12 as a dispersant.

14. Use of the copolymer from one or more of claims 1 to 7 or prepared according to one or more of claims 8 to 12, wherein the monomers which interact with the solid or solids to be dispersed are selected from the group consisting of aminoalkyl (meth)acrylates, the amine functionality of which has either been salified with acids or reacted with alkylating agents to form quaternary ammonium groups.

15. Use of the copolymer from one or more of claims 1 to 7 or prepared according to one or more of claims 8 to 12 for dispersing pigments in organic solvents and/or water, where appropriate in the presence of binders and auxiliaries conventionally contained in paints.

16. Use of the copolymer from one or more of claims 1 to 7 or prepared according to one or more of claims 8 to 12 for preparing pigment-containing coating compositions and moulding compounds and for coating pigments.

17. Use of the copolymer from one or more of claims 1 to 7 or prepared according to one or more of claims 8 to 12 for preparing a coating composition, wherein a binder, one or more organic solvents and/or water, pigments, the dispersant and any further, conventional auxiliaries are dispersed together.

18. Paints, pastes and moulding compounds containing pigments and the copolymer from one or more of claims 1 to 7 or prepared according to one or more of claims 8 to 12.

19. Coating compositions, pastes and/or moulding compounds according to one or more of claims 1 to 7 or prepared according to one or more of claims 8 to 12, wherein these contain one or more pigments, organic solvents and/or water, where appropriate in the presence of binders and auxiliaries conventionally contained in paints.

20. Pigments coated with the copolymer from one or more of claims 1 to 7 or prepared according to one or more of claims 8 to 12.

**Revendications**

1. Copolymères contenant trois segments à concentrations ioniques différentes, la proportion des monomères ioniques étant, dans chaque segment, comprise entre 1 et 100 mol%, le deuxième et le troisième segment contenant des monomères éthyléniquement insaturés présents dans les segments respectifs qui les précèdent et lesdits copolymères pouvant être préparés par NMP ou RAFT au moyen d'un initiateur monofonctionnel, la polymérisation du premier segment étant réalisée jusqu'à ce qu'un taux de réaction du mélange de monomères mis en oeuvre ou du monomère mis en oeuvre soit compris entre 10 à 95 mol%,
la polymérisation destinée à joindre le deuxième segment au premier segment étant réalisée en mettant en oeuvre les monomères du premier segment qui n'ont pas réagi et un mélange de monomères ou un monomère qui se distingue du mélange de monomères ou du monomère du premier segment au moins par la quantité de monomères ioniques ou de précurseurs de monomères ioniques mis en oeuvre, la polymérisation du deuxième segment étant réalisée jusqu'à ce qu'un taux de réaction des monomères disponibles pour la réaction soit compris entre 10 à 95 mol%, et
la polymérisation destinée à joindre le troisième segment au deuxième segment étant réalisée en mettant en oeuvre les monomères du deuxième segment et, le cas échéant, du premier segment qui n'ont pas réagi ainsi qu'un mélange de monomères ou un monomère qui se distingue du mélange de monomères ou du monomère du deuxième segment au moins par la quantité de monomères ioniques ou de précurseurs de monomères ioniques mis en oeuvre,
et les précurseurs de monomères ioniques, s'ils sont mis en oeuvre, subissant dans leur intégralité ou en partie une réaction les transformant en monomères ioniques.

2.  Copolymères selon la revendication 1, la polymérisation destinée à joindre le deuxième segment au premier segment étant réalisée en ajoutant au premier segment et aux monomères du premier segment qui n'ont pas réagi ledit mélange de monomères ou ledit monomère qui se distingue du mélange de monomères ou du monomère du premier segment au moins par la quantité de monomères ioniques ou de précurseurs de monomères ioniques mis en oeuvre, de façon à ce que l'on obtienne, à travers la vitesse d'introduction et/ou les différentes vitesses de réaction des monomères contenus dans le mélange de monomères introduit ou dans le monomère introduit, un dégradé progressif de la concentration ionique au sein du deuxième segment.

3.  Copolymères selon les revendications 1 ou 2, la polymérisation destinée à joindre le troisième segment au deuxième segment étant réalisée en ajoutant au prépolymère constitué par le premier et le deuxième segment et par les monomères du deuxième et, le cas échéant, du premier segment qui n'ont pas réagi le mélange de monomères ou le monomère qui se distingue du mélange de monomères ou du monomère du deuxième segment au moins par la quantité de monomères ioniques ou de précurseurs de monomères ioniques mis en oeuvre, de façon à ce que l'on obtienne, à travers la vitesse d'introduction et/ou les différentes vitesses de réaction des monomères contenus dans le mélange de monomères introduit ou dans le monomère introduit, un dégradé progressif de la concentration ionique au sein du troisième segment.

4.  Copolymères selon une ou plusieurs des revendications 1 à 3, le segment de polymère présentant la concentration la plus élevée en monomères ioniques contenant soit exclusivement des monomères éthyléniquement insaturés pourvus de groupements ioniques soit un mélange contenant des monomères éthyléniquement insaturés pourvus de groupements ioniques et des monomères éthyléniquement insaturés pourvus de groupements non-ioniques, et les segments de polymère présentant les concentrations moins élevées en groupements ioniques étant des mélanges entre des monomères éthyléniquement insaturés pourvus de groupements ioniques et des monomères éthyléniquement insaturés pourvus de groupements non-ioniques, et lesdits monomères éthyléniquement insaturés non-ioniques étant sélectionnés dans le groupe constitué par les esters d'acide acrylique et méthacrylique, le styrène et ses dérivés, les esters vinyliques d'acides carboxyliques, l'anhydride maléique et l'acide maléique, l'imide maléique et ses dérivés N-substitués, les hétérocycles contenant de l'azote ou du soufre pourvus d'unités éthyléniquement insaturées, l'acryl- et le méthacrylamide, les acryl- et méthacrylamides substitués de type N-alkyle et N,N-dialkyle.

5.  Copolymères selon une ou plusieurs des revendications 1 à 4, lesdits monomères ioniques étant des monomères ioniques éthyléniquement insaturés, sélectionnés dans le groupe constitué par les sels des acides acrylique, méthacrylique et maléique, les acrylates et méthacrylates d'aminoalkyle quaternaires et les sels de monomères contenant de l'acide phosphorique.

6.  Copolymères selon une ou plusieurs des revendications 1 à 5, lesdits précurseurs de monomères ioniques étant des précurseurs de monomères ioniques éthyléniquement insaturés, sélectionnés dans le groupe constitué par les acides acrylique, méthacrylique et maléique, l'anhydride maléique, les monomères éthyléniquement insaturés portant des groupements oxirane ou amine.

7.  Copolymères selon une ou plusieurs des revendications 1 à 6, des segments adjacents dotés de concentrations ioniques différentes présentant une proportion de monomères ioniques différant d'au moins 2, de préférence d'au moins 4, avec une préférence particulière d'au moins 6 mol%.

8.  Procédé de préparation de copolymères contenant trois segments à concentrations ioniques différentes, la proportion des monomères ioniques étant, dans chaque segment, comprise entre 1 et 100 mol%, chaque segment contenant au moins un monomère non-ionique et au moins un monomère ionique, le deuxième et le troisième segment contenant des monomères présents dans les segments respectifs qui les précèdent et lesdits copolymères étant préparés par NMP ou RAFT au moyen d'un initiateur monofonctionnel,

la polymérisation du premier segment étant réalisée jusqu'à ce qu'un taux de réaction du mélange de monomères mis en oeuvre ou du monomère mis en oeuvre soit compris entre 10 à 95 mol%,

la polymérisation destinée à joindre le deuxième segment au premier segment étant réalisée en mettant en oeuvre les monomères du premier segment qui n'ont pas réagi et un mélange de monomères ou un monomère qui se distingue du mélange de monomères ou du monomère du premier segment au moins par la quantité de monomères ioniques ou de précurseurs de monomères ioniques mis en oeuvre, la polymérisation du deuxième segment étant réalisée jusqu'à ce qu'un taux de réaction des monomères disponibles pour la réaction soit compris entre 10 à 95 mol%, et

la polymérisation destinée à joindre le troisième segment au deuxième segment étant réalisée en mettant en oeuvre les monomères du deuxième segment et, le cas échéant, du premier segment qui n'ont pas réagi ainsi qu'un mélange de monomères ou un monomère qui se distingue du mélange de monomères ou du monomère du deuxième segment au moins par la quantité de monomères ioniques ou de précurseurs de monomères ioniques mis en oeuvre, et les précurseurs de monomères ioniques, s'ils sont mis en oeuvre, subissant dans leur intégralité ou en partie une réaction les transformant en monomères ioniques.

9. Procédé selon la revendication 8, la polymérisation destinée à joindre le deuxième segment au premier segment étant réalisée en ajoutant au premier segment et aux monomères du premier segment qui n'ont pas réagi ledit mélange de monomères ou ledit monomère qui se distingue du mélange de monomères ou du monomère du premier segment au moins par la quantité de monomères ioniques ou de précurseurs de monomères ioniques mis en oeuvre, de façon à ce que l'on obtienne par ladite polymérisation, à travers la vitesse d'introduction et/ou les différentes vitesses de réaction des monomères contenus dans le mélange de monomères introduit ou dans le monomère introduit, un dégradé progressif de la concentration ionique au sein du deuxième segment.

10. Procédé selon les revendications 8 ou 9, la polymérisation destinée à joindre le troisième segment au deuxième segment étant réalisée en ajoutant au prépolymère constitué par le premier et le deuxième segment et par les monomères du deuxième et, le cas échéant, du premier segment qui n'ont pas réagi le mélange de monomères ou le monomère qui se distingue du mélange de monomères ou du monomère du deuxième segment au moins par la quantité de monomères ioniques ou de précurseurs de monomères ioniques mis en oeuvre, de façon à ce que l'on obtienne par ladite polymérisation, à travers la vitesse d'introduction et/ou les différentes vitesses de réaction des monomères contenus dans le mélange de monomères introduit ou dans le monomère introduit, un dégradé progressif de la concentration ionique au sein du troisième segment.

11. Procédé selon une ou plusieurs des revendications 8 à 10, le régulateur de polymérisation étant dissocié du polymère dans une étape supplémentaire.

12. Procédé selon une ou plusieurs des revendications 8 à 11, le copolymère obtenu étant modifié, dans une étape supplémentaire, dans une réaction analogue au polymère.

13. Utilisation du copolymère de l'une ou de plusieurs des revendications 1 à 7 ou préparé selon une ou plusieurs des revendications 8 à 12 en tant qu'agent de dispersion.

14. Utilisation du copolymère de l'une ou de plusieurs des revendications 1 à 7 ou préparé selon une ou plusieurs des revendications 8 à 12, les monomères qui entrent en interaction avec la matière solide à disperser ou les matières solides à disperser étant sélectionnés dans le groupe constitué par les (méth)acrylates d'aminoalkyle dont la fonction amine a été soit transformée en sel avec des acides soit transformée en groupements d'ammonium quaternaires avec des agents d'alkylation.

15. Utilisation du copolymère de l'une ou de plusieurs des revendications 1 à 7 ou préparé selon une ou plusieurs des revendications 8 à 12 pour disperser des pigments dans des solvants organiques et/ou de l'eau, le cas échéant en présence de liants et d'agents auxiliaires usuels dans le domaine des laques.

16. Utilisation du copolymère de l'une ou de plusieurs des revendications 1 à 7 ou préparé selon une ou plusieurs des revendications 8 à 12 pour préparer des agents de revêtement et matières moulables contenant des pigments ainsi que pour revêtir des pigments.

**17.** Utilisation du copolymère de l'une ou de plusieurs des revendications 1 à 7 ou préparé selon une ou plusieurs des revendications 8 à 12 pour la préparation d'un agent de revêtement, un liant, un ou plusieurs solvants organiques et/ou de l'eau, des pigments, l'agent de dispersion et, le cas échéant, d'autres agents auxiliaires usuels étant dispersés ensemble.

**18.** Laques, pâtes et matières moulables contenant des pigments et le copolymère de l'une ou de plusieurs des revendications 1 à 7 ou préparé selon une ou plusieurs des revendications 8 à 12.

**19.** Agents de revêtement, pâtes et/ou matières moulables selon une ou plusieurs des revendications 1 à 7 ou préparés selon une ou plusieurs des revendications 8 à 12, ceux-ci contenant un ou plusieurs pigments, solvants organiques et/ou de l'eau, le cas échéant en présence de liants et d'agents auxiliaires usuels dans le domaine des laques.

**20.** Pigments revêtus du copolymère de l'une ou de plusieurs des revendications 1 à 7 ou préparé selon une ou plusieurs des revendications 8 à 12.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6291620 B
- WO 9801478 A
- WO 9858974 A
- WO 9931144 A
- WO 0040630 A
- WO 03046029 A
- EP 1275689 A
- EP 1416019 A
- US 6111054 A
- EP 0270126 A

**In der Beschreibung aufgeführte Nicht-Patentliteratur**

- *Polym. Int.,* 2000, vol. 49, 993
- *Aust. J. Chem,* 2005, vol. 58, 379
- *J. Polym. Sci. Part A: Polym. Chem.,* 2005, vol. 43, 5347
- *Chem. Rev.,* 2001, vol. 101, 3661
- *Chem. Rev.,* 2001, vol. 101, 2921
- Group Transfer Polymerization. **O. W. WEBSTER.** Encyclopedia of Polymer Science and Engineering. Wiley Interscience, 1987, vol. 7, 580
- *Macromol. Symp.,* 1996, vol. 111, 63
- *Macromolecular Rapid Communications,* 2001, vol. 22, 700
- *Makromol. Chem. Rapid. Commun.,* 1982, vol. 3, 127
- *J. Am. Chem. Soc.,* 1994, vol. 116, 7973
- *Angewandte Chemie Int. Ed.,* 2004, vol. 43, 6186
- *Macromolecules,* 2004, vol. 37, 4453
- *Macromolecules,* 2001, vol. 34, 3856
- **W. HERBST ; K. HUNGER.** Industrial Organic Pigments. Wiley-VCH, 1997
- *Macromolecules,* 2000, vol. 33, 1141